# EUROPÄISCHE PATENTANMELDUNG

(11) **EP 3 066 914 A1**
(43) Veröffentlichungstag der Anmeldung: **14.09.2016**
(21) Anmeldenummer: 16159879.2
(22) Anmeldetag: 11.03.2016
(51) Int. Cl.: A01G 31/00

(54) **SUBSTRAT FÜR DEN ANBAU VON PFLANZEN**

(30) Priorität: 13.03.2015 DE 102015003168
(71) Anmelder: KMK Produktions- und Handelsgesellschaft mbH, 94091 Nürnberg (DE)
(72) Erfinder:
(74) Vertreter: Hafner & Kohl

(57) **Zusammenfassung**

Die Erfindung betrifft ein Substrat 1 für den Anbau von Pflanzen 2, insbesondere Kräutern, bevorzugt Kresse, umfassend einen Substratgrundkörper 3, wobei der Substratgrundkörper 3 einen ein- oder mehrlagigen Aufbau, umfassend eine Zentrallage 6 aus reinem Zellstoff, aufweist, und die Verwendung eines solchen Substrats 1 für den Anbau von Pflanzen 2, insbesondere Kräutern, bevorzugt Kresse.

## Beschreibung

Die Erfindung betrifft ein Substrat für den Anbau von Pflanzen, insbesondere Kräutern, bevorzugt Kresse, umfassend einen Substratgrundkörper, sowie die Verwendung eines solchen Substrats für den Anbau von Pflanzen, insbesondere Kräutern, bevorzugt Kresse.

Substrate für den Anbau von Pflanzen respektive deren Verwendung für den Anbau von Pflanzen ist bzw. sind an und für sich bekannt. Derartige Substrate umfassen typischerweise einen ein gewisses Flüssigkeitsaufnahmevermögen aufweisenden Substratgrundkörper, in welchen Pflanzen, insbesondere Kräuter, wie z. B. Kresse, respektive entsprechende Samen, Setzlinge, etc. eingesetzt und angebaut werden können. Die herangewachsenen Pflanzen werden von dem Substratgrundkörper entfernt. Die Entfernung herangewachsener Pflanzen erfolgt typischerweise durch Abschneiden, d. h. durch einen oder mehrere Schnittvorgänge.

Ein bekanntes Beispiel eines entsprechenden Substrats umfasst einen granularen, d. h. aus einem Granulat gebildeten, Substratgrundkörper. Bei dem bekannten Substrat ergeben sich insbesondere Schwierigkeiten im Zusammenhang mit dem Entfernen herangewachsener Pflanzen. Schwierigkeiten sind insbesondere für nicht sauber abgeschnittene Pflanzen gegeben, welche aus dem Substratgrundkörper herausgezogen werden. Aufgrund der innigen Verbindung zwischen den Pflanzen und dem Granulat können hierbei an den Pflanzen anhaftende Granulatbestandteile aus dem Substratgrundkörper gelöst werden. Entsprechende Granulatbestandteile müssen mit vergleichsweise hohem Aufwand von den Pflanzen entfernt werden.

Der Erfindung liegt die Aufgabe zugrunde, ein demgegenüber verbessertes Substrat für den Anbau von Pflanzen, insbesondere Kräutern, bevorzugt Kresse, anzugeben.

Die Aufgabe wird durch ein Substrat für den Anbau von Pflanzen, insbesondere Kräutern, bevorzugt Kresse, gemäß Anspruch 1 sowie die Verwendung eines entsprechenden Substrats für den Anbau von Pflanzen, insbesondere Kräutern, bevorzugt Kresse, gemäß Anspruch 13 gelöst. Die abhängigen Ansprüche betreffen vorteilhafte Ausführungsformen des Substrats bzw. der Verwendung.

Das hierin beschriebene Substrat ist für den Anbau von Pflanzen, insbesondere krautigen Pflanzen bzw. Kräutern, wie z. B. Kresse oder dergleichen, ausgebildet bzw. eingerichtet.

Wenngleich im Weiteren mitunter von krautigen Pflanzen die Rede ist, können vermittels des Substrats je nach geometrisch-konstruktiver Auslegung bzw. Dimensionierung prinzipiell selbstverständlich auch andere Pflanzenarten, wie z. B. Blumen- oder Gemüsepflanzen, angebaut werden.

Das Substrat umfasst einen Substratgrundkörper. Ein entsprechender Substratgrundkörper ist strukturell derart beschaffen, dass auf und/oder in diesen Samen, Setzlinge, etc. auf- und/oder eingebracht sein können bzw. werden können, welche durch entsprechende Nährstoffzugabe, insbesondere Wasserzugabe, zu entsprechenden Pflanzen heranwachsen. Haben die Pflanzen ein gewisses Wachstum erreicht, können diese, z. B. durch einen oder mehrere Schnittvorgänge, von dem Substratgrundkörper entfernt werden.

Ein entsprechender Substratgrundkörper weist typischerweise eine flächige, d. h. im Wesentlichen zweidimensionale, band- oder blattartige geometrische Gestalt auf.

Ein entsprechender Substratgrundkörper weist einen ein- oder mehrlagigen, d. h. typischerweise zwei- oder dreilagigen, Aufbau auf. Mithin kann ein entsprechender Substratgrundkörper und somit auch ein entsprechendes Substrat als ein- oder mehrlagiges Produkt bezeichnet bzw. erachtet werden. Ein einlagiger Aufbau eines entsprechenden Substratgrundkörpers ergibt sich aus wenigstens einer Zentrallage. Ein mehrlagiger Aufbau eines entsprechenden Substratgrundkörpers ergibt sich aus einer besonderen Anordnung wenigstens einer Zentrallage und wenigstens einer Decklage. Die Zentrallage kann auf einer Decklage angeordnet oder ausgebildet sein (zweilagiger Aufbau). Die Zentrallage kann auch zwischen einer ersten Decklage und einer zweiten Decklage angeordnet bzw. ausgebildet sein (dreilagiger Aufbau).

Eine erste Decklage, sofern vorhanden, bildet typischerweise eine erste Außen- bzw. Oberfläche des Substratgrundkörpers bzw. des Substrats. Sofern keine weitere Decklage vorhanden ist, bildet die Zentrallage eine der ersten Außen- oder Oberfläche des Substratgrundkörpers gegenüber liegende zweite Außen- oder Oberfläche des Substratgrundkörpers bzw. des Substrats. Alternativ bildet eine (zusätzliche) zweite Decklage typischerweise eine der ersten Außen- oder Oberfläche des Substratgrundkörpers gegenüber liegende zweite Außen- oder Oberfläche des Substratgrundkörpers bzw. des Substrats. Eine erste Außen- oder Oberfläche des Substratgrundkörpers kann eine Oberseite des Substratgrundkörpers bzw. des Substrats bilden, eine zweite Außen- oder Oberfläche des Substratgrundkörpers kann eine Unterseite des Substratgrundkörpers bzw. des Substrats bilden, oder umgekehrt.

Auch die Zentrallage kann einen mehrlagigen Aufbau aufweisen. Es ist also möglich, dass die Zentrallage aus mehreren übereinander angeordneten oder ausgebildeten Zentrallagenelementen ausgebildet ist. In entsprechender Weise können auch entsprechende Decklagen einen mehrlagigen Aufbau aufweisen. Es ist also auch möglich, dass eine entsprechende Decklage aus mehreren übereinander angeordneten oder ausgebildeten Decklagenelementen ausgebildet ist.

Im Hinblick auf die Verwendung des Substratgrundkörpers als Substrat für den Anbau entsprechender Pflanzen ist von besonderer Bedeutung, dass die Zentrallage wie auch entsprechende Decklagen, sofern vorhanden, aus reinem Zellstoff gebildet ist bzw. sind. Unter Zellstoff ist im Allgemeinen ein Fasermaterial bzw. faseriges Material mit einem gewissen Feuchtigkeits- bzw. Flüssigkeitsaufnahmevermögen, insbesondere Wasseraufnahmevermögen, zu verstehen. Unter reinem Zellstoff ist zu verstehen, dass der Zellstoff (nahezu) ausschließlich aus dem eigentlichen Zellstoffmaterial gebildet ist, d. h. neben dem eigentlichen Zellstoffmaterial keine (oder kaum weitere) zusätzliche(n) Bestandteile, wie z. B. Rückstände aus Zellstoffrecyclingprozessen, enthält. Hieraus folgt, dass es sich bei einem reinen Zellstoff typischerweise nicht um ein Recyclingmaterial, sondern typischerweise um so genannten Frischzellstoff handelt. In allen Fällen kann der Zellstoff (zusätzlich) andere bzw. weitere biologisch abbaubare bzw. unbedenkliche Substanzen enthalten.

Ein entsprechender Zellstoff kann gegebenenfalls aus mehreren (unterschiedlichen) Zellstoffmaterialien gebildet sein bzw. mehrere (unterschiedliche) Zellstoffmaterialien umfassen. Entsprechende Zellstoffmaterialien können sich hinsichtlich ihrer jeweiligen chemischen Eigenschaften, d. h. ihrer Zellstoffchemie bzw. chemischen Struktur, bzw. hinsichtlich ihrer jeweiligen physikalischen, insbesondere mechanischen, Eigenschaften unterscheiden. Die physikalischen bzw. mechanischen Eigenschaften jeweiliger Zellstoffmaterialien ergeben sich insbesondere aus den jeweiligen Faserparametern, d. h. z. B. Faseranordnung, Faserdichte, Faserlänge, Faserstärke, etc., des jeweiligen Zellstoffs; mithin können sich entsprechende Zellstoffmaterialien auch hinsichtlich entsprechender Faserparameter unterscheiden.

Der Zellstoff kann grundsätzlich pflanzlich oder synthetisch sein. Zweckmäßig ist die Verwendung von Zellstoffen auf pflanzlicher Basis. Dabei ist die Verwendung von Cellulose oder von auf Cellulose basierenden Zellstoffen bevorzugt. Bei dem oben erwähnten Frischzellstoff kann es sich sonach zweckmäßig um Frischcellulose, wie sie beispielsweise zur Herstellung von Hygienepapier verwendet wird, handeln.

Das Substrat bzw. dessen Verwendung weist, insbesondere gegenüber dem eingangs beschriebenen Stand der Technik, folgende Vorteile auf: Durch die Ausbildung des Substratgrundkörpers respektive der diesen bildenden Zentrallage und, sofern vorhanden, Decklagen aus reinem Zellstoff ist dieser vergleichsweise leicht und weist ein hohes Feuchtigkeits- bzw. Flüssigkeitsaufnahmevermögen, insbesondere Wasseraufnahmevermögen, auf. Die Verwendung von reinem Zellstoff ermöglicht zudem ein Verankern bzw. Verhaken ausgetriebener Wurzeln entsprechender Pflanzen in dem Substratgrundkörper, sodass es nicht zu befürchten ist, dass sich Bestandteile des Substratgrundkörpers beim Entfernen herangewachsener Pflanzen von dem Substratgrundkörper lösen. Reiner Zellstoff ist zudem als Endlos- bzw. Massenware kostengünstig und somit wirtschaftlich herstellbar. Durch die beschriebene flächige geometrische Gestalt ist der Substratgrundkörper gut handhabbar, lagerbar und transportierbar. Die gute Handhabbarkeit bzw. Transportierbarkeit ergibt sich insbesondere daraus, dass reiner Zellstoff in eine Vielzahl unterschiedlicher Geometrien faltbar bzw. auf einen Trägerkörper aufrollbar ist.

Nachfolgend werden unterschiedliche Ausführungsformen des Substrats erläutert, welche sich insbesondere hinsichtlich bestimmter physikalischer Parameter bzw. sich hieraus ergebender physikalischer Eigenschaften der Zentrallage und optional vorhandener Decklagen unterschieden. Nachfolgende Ausführungen gelten sowohl für Ausführungsformen des Substrats mit einer oder mehreren Decklagen.

Entsprechende Decklagen können im Vergleich zu der Zentrallage formstabiler ausgebildet sein, sodass die Decklagen, insbesondere auch bei Quellung, eine gewisse Formhaltewirkung auf die Zentrallage ausüben. Derart kann sichergestellt werden, dass die typischerweise zu Auffaserung bzw. Auflösung neigende Zentrallage, insbesondere auch bei Quellung, in Form gehalten ist. Die Decklagen können im Vergleich zu der Zentrallage insoweit aus einem formstabile(re)n oder formstabil(er) ausgebildeten Zellstoff gebildet sein. Die mechanischen Eigenschaften der Lagen ergeben sich, wie erwähnt, insbesondere aus entsprechenden Faserparametern des Zellstoffs, sodass über entsprechende Faserparameter des Zellstoffs Einfluss auf die Formstabilität und Formhaltewirkung der Decklagen genommen werden kann.

Zur Realisierung einer entsprechend hohen Formstabilität können entsprechende Decklagen (auch) aus einem gepressten oder textilartig, insbesondere gewebe- oder gewirkeartig, zusammengefassten Zellstoff und die Zentrallage aus einem nicht oder weniger gepressten, insbesondere losen, bevorzugt gewirkeartigen, Zellstoff gebildet sein. Durch unterschiedliche Pressgrade ergeben sich ebenso Unterschiede in den strukturellen Eigenschaften, insbesondere auch den mechanischen Eigenschaften sowie der Formstabilität, entsprechender Decklagen und der Zentrallage. Entsprechende Decklagen sind, insbesondere auch bei Quellung, (im Wesentlichen) formstabil.

Entsprechende Decklagen können im Vergleich zu der Zentrallage eine höhere Dichte aufweisen. Die Dichte eines Zellstoffs ist typischerweise proportional zu dessen mechanischer Stabilität, insbesondere dessen Reiß- bzw. Zugfestigkeit. Durch eine im Vergleich höhere Dichte entsprechender Decklagen verleihen diese dem Substratgrundkörper - ähnlich einer aus der Leichtbautechnik bekannten Sandwichstruktur - eine hohe spezifische mechanische Stabilität. Da die Dichte typischerweise auch ein das Quellungsvermögen jeweiliger Lagen beeinflussender Parameter ist, kann über die Dichte jeweiliger Lagen auch das Quellungsvermögen jeweiliger Lagen gezielt beeinflusst werden. Durch eine im Vergleich geringe(re) Dichte bildet die Zentrallage zudem besondere Verankerungs- bzw. Verhakungsmöglichkeiten zur Verankerung bzw. Verhakung der Wurzeln entsprechender in dem Substrat heranwachsender Pflanzen.

Neben der Dichte ist auch das Flächengewicht ein die mechanischen Eigenschaften wie auch das Quellungsvermögen jeweiliger Lagen beeinflussender Parameter. Entsprechende Decklagen können im Vergleich zu der Zentrallage (zudem) ein geringeres Flächengewicht aufweisen. Konkret können die Decklagen z. B. ein Flächengewicht in einem Bereich zwischen 5 und 50 g/m², insbesondere ein Flächengewicht in einem Bereich zwischen 10 und 20 g/m², aufweisen. Die Zentrallage kann ein Flächengewicht in einem Bereich zwischen 1 und 3000 g/m², insbesondere ein Flächengewicht in einem Bereich zwischen 200 und 500 g/m², aufweisen. Selbstverständlich sind hier Ausnahmen denkbar. Auch durch ein hohes bzw. im Vergleich höheres Flächengewicht bildet die Zentrallage (in Kombination mit einer geringe(re)n Dichte) besondere Verankerungs- bzw. Verhakungsmöglichkeiten zur Verankerung bzw. Verhakung der Wurzeln entsprechender in dem Substrat heranwachsender Pflanzen.

Entsprechende Decklagen können im Vergleich zu der Zentrallage eine geringere Dicke aufweisen. Die Ausbildung entsprechender Decklagen mit einem, insbesondere im Vergleich zu der Zentrallage, geringen Dicke trägt zu einem vergleichsweise kompakten Aufbau des Substratgrundkörpers bei. Typischerweise liegt die Gesamtdicke eines Substratgrundkörpers in einem Bereich zwischen 0,5 und 35 mm, insbesondere zwischen 1 und 5 mm, bezogen auf den Trockenzustand des Substrats. Dabei kann die Dicke der Zentrallage in einem Bereich zwischen 0,5 und 34 mm, insbesondere zwischen 0,5 und 4,5 mm, liegen. Selbstverständlich sind auch hier Ausnahmen denkbar.

Im Zusammenhang mit der Verwendung reinen Zellstoffs zur Ausbildung der den Substratgrundkörper bildenden Zentrallage bzw. Lagen wurde bereits ein gewisses Feuchtigkeits- bzw. Flüssigkeitsaufnahmevermögen, insbesondere Wasseraufnahmevermögen, der Zentrallage bzw. der Lagen erwähnt. Aus dem Feuchtigkeits- bzw. Flüssigkeitsaufnahmevermögen, insbesondere Wasseraufnahmevermögen, resultiert, wie dargestellt, ein gewisses Quellungsvermögen der Zentrallage bzw. der Lagen. Mithin besitzt die Zentrallage bzw. besitzen die Lagen bei Beaufschlagung mit einer Flüssigkeit, insbesondere Wasser, bzw. bei Aussetzung in einer feuchten Atmosphäre, z. B. in einer Wasserdampfatmosphäre, die Fähigkeit, eine bestimmte Menge an Flüssigkeit bzw. Feuchtigkeit aufzunehmen bzw. einzulagern. In der Zentrallage bzw. den jeweiligen Lagen aufgenommene bzw. eingelagerte Flüssigkeit bzw. Feuchtigkeit kann an die vermittels des Substrats anzubauenden Pflanzen, insbesondere Kräuter, respektive entsprechende Samen bzw. Setzlinge abgegeben werden.

Entsprechende Decklagen können sich in ihrem Feuchtigkeits- bzw. Flüssigkeitsaufnahmevermögen und somit ihrem Quellungsvermögen von der Zentrallage unterscheiden. Typischerweise weisen entsprechende Decklagen im Vergleich zu der Zentrallage andere Quellungseigenschaften auf, wobei die Decklagen im Vergleich zu der Zentrallage ein geringeres Quellungsvermögen und somit Feuchtigkeits- bzw. Flüssigkeitsaufnahmevermögen, insbesondere Wasseraufnahmevermögen, aufweisen. Mithin werden die strukturellen Eigenschaften entsprechender Decklagen durch die Aufnahme von Feuchtigkeit bzw. Flüssigkeit und eine damit einhergehende Quellung im Vergleich zu der Zentrallage weniger beeinträchtigt; entsprechende Decklagen bleiben auch im gequollenen Zustand (im Wesentlichen) formstabil.

Demzufolge ist die Zentrallage typischerweise die Lage, welche den Großteil einer insgesamt in dem Substratgrundkörper aufnehmbaren bzw. aufgenommenen Feuchtigkeits-oder Flüssigkeitsmenge aufnimmt. In diesem Zusammenhang ist nochmals die bevorzugte gewirkeartige Ausbildung der Zentrallage zu erwähnen, welche eine besonders hohe und schnelle Feuchtigkeits- bzw. Flüssigkeitsaufnahme, insbesondere Wasseraufnahme, ermöglicht.

Selbstverständlich liegen entsprechende Decklagen, sofern vorhanden, und die Zentrallage nicht lose aufeinander auf, sondern sind unter Ausbildung eines den Substratgrundkörper bildenden mehrlagigen Verbunds stabil mit- bzw. untereinander verbunden. In diesem Zusammenhang ist anzumerken, dass entsprechende Decklagen als auf ein bestimmtes Flächengewicht vorverpresste Halbzeuge vorliegen können, bevor sie mit der Zentrallage zur Ausbildung des Substratgrundkörpers verbunden werden.

Zur Verbindung der einzelnen Lagen mit- bzw. untereinander kommen geeignete form- und/oder kraft- und/oder stoffschlüssige Verbindungsarten in Betracht. Eine erste Decklage bzw. eine zweite Decklage können also jeweils zumindest abschnittsweise form- und/oder kraft- und/oder stoffschlüssig mit der Zentrallage verbunden sein. Entsprechend kann eine formschlüssige Verbindung zwischen einer Decklage und der Zentrallage vermittels einer Klett- oder Hakenverbindung gebildet sein. Eine kraftschlüssige Verbindung zwischen einer Decklage und der Zentrallage kann vermittels einer Pressverbindung gebildet sein. Eine stoffschlüssige Verbindung zwischen einer Decklage und der Zentrallage kann vermittels einer Klebeverbindung gebildet sein. Gleiches gilt für die Verbindung von Decklagen mit- bzw. untereinander.

Eine Klett- oder Hakenverbindung kann beispielsweise durch an der Zentrallage und entsprechenden Decklagen, sofern vorhanden, ausgebildete Formschlusselemente, z. B. in Form von Klett- bzw. Hakenelementen, und korrespondierenden Formschlusselementen, z. B. in Form von Schlaufenelementen, realisiert sein. Denkbar ist es alternativ oder ergänzend auch, separate Formschlusselemente, z. B. in Form entsprechender Klett- bzw. Haken- und Schlaufenelemente, zwischen zu verbindenden Lagen anzuordnen. Eine Klebeverbindung kann z. B. über einen biologisch abbaubaren bzw. gut verträglichen Klebstoff, z. B. basierend auf Stärke, realisiert sein.

Ganz allgemein gilt, dass, sofern vorhanden, entsprechende Decklagen hinsichtlich ihrer chemischen bzw. physikalischen Eigenschaften gleich oder unterschiedlich ausgebildet sein können. Die chemischen bzw. physikalischen Eigenschaften entsprechender Decklagen können sonach individuell an ein konkretes Anforderungsprofil des Substrats angepasst gewählt werden.

Die Zentrallage und/oder wenigstens eine Decklage kann zumindest abschnittsweise mit wenigstens einer Nährstoffzusammensetzung für eine jeweilige Pflanze versetzt sein. Derart lässt sich das Heranwachsen der Pflanzen verbessern bzw. stabilisieren. Bei einer entsprechenden Nährstoffzusammensetzung kann es sich z. B. um eine Nitrat-, Phosphat- und/oder Kaliumlösung handeln. Eine entsprechende Nährstoffzusammensetzung ist typischerweise auf die in dem Substrat jeweils anzubauenden Pflanzen abgestimmt. Eine entsprechende Nährstoffzusammensetzung kann auch in Form einer, z. B. gallert- oder gelartigen, Imprägnierung jeweiliger Lagen vorliegen.

Insbesondere bei einer mehrere übereinander angeordnete oder ausgebildete Zentrallagenelemente umfassenden Zentrallage kann es zweckmäßig sein, dass wenigstens ein Zentrallagenelement mit einer entsprechenden Nährstoffzusammensetzung versehen ist.

Dies ist insbesondere im Hinblick auf den Anbau von Blumen- oder Gemüsepflanzen respektive die Zucht entsprechender Setzlinge zweckmäßig.

Es wurde erwähnt, dass, die Pflanzen sobald diese ein gewisses Wachstum erreicht haben, z. B. durch einen oder mehrere Schnittvorgänge, von dem Substratgrundkörper entfernt werden können. Aufgrund der Ausbildung des Substrats aus reinem Zellstoff, allgemein aus biologisch abbaubarem bzw. unbedenklichem Material, ist es jedoch auch möglich, dass das Substrat bzw. der Substratgrundkörper insgesamt oder einzelne oder mehrere Lagen des Substratgrundkörpers gemeinsam mit den Pflanzen in ein Beet oder dergleichen eingesetzt werden kann bzw. können. Ein mehrere Lagen umfassender Verbund des Substratgrundkörpers kann sonach vorher zumindest teilweise aufgelöst und entsprechende aus dem Verbund gelöste Lagen gemeinsam mit den darin befindlichen, d. h. z. B. verhakten oder verwurzelten, Pflanzen in ein Beet oder dergleichen eingesetzt werden. Die Pflanzen müssen also nicht zwingend von dem Substratgrundkörper entfernt werden, was einen besonders schonenden Umgang mit den Pflanzen bedeutet.

Neben dem Substrat als solchem betrifft die Erfindung auch die Verwendung eines einen ein- oder mehrlagigen Aufbau, umfassend eine Zentrallage aus reinem Zellstoff, aufweisenden Substratgrundkörper umfassenden Substrats für den Anbau von Pflanzen, insbesondere Kräutern, bevorzugt Kresse.

Das verwendete Substrat kann einen Substratgrundkörper mit einem mehrlagigen Aufbau umfassen. Der Substratgrundkörper kann einen mehrlagigen Aufbau, bestehend aus einer ersten Decklage aus reinem Zellstoff und der wenigstens einen Zentrallage, welche auf der ersten Decklage angeordnet oder ausgebildet ist, aufweisen. Alternativ kann der Substratgrundkörper einen mehrlagigen Aufbau, bestehend aus einer ersten Decklage aus reinem Zellstoff, einer zweiten Decklage aus einem Zellstoff und der wenigstens einen Zentrallage, welche zwischen der ersten Decklage und der zweiten Decklage angeordnet oder ausgebildet ist, aufweisen.

Anhand von Untersuchungen konnte gezeigt werden, dass die Verwendung eines entsprechenden Substrats sich hervorragend für den Anbau von Pflanzen, insbesondere von krautigen Pflanzen bzw. Kräutern, bevorzugt Kresse, Blumen- oder Gemüsepflanzen etc., eignet. Es ergeben sich die im Zusammenhang mit dem Substrat weiter oben beschriebenen Vorteile.

Im Allgemeinen gelten sämtliche Ausführungen im Zusammenhang mit dem Substrat analog für die Verwendung eines solchen Substrats für den Anbau von Pflanzen, insbesondere Kräutern, bevorzugt Kresse.

Die Erfindung ist anhand von Ausführungsbeispielen in den Zeichnungsfiguren näher erläutert. Dabei zeigt:
- Fig. 1: eine Prinzipdarstellung eines Substrats gemäß einem Ausführungsbeispiel der Erfindung;
- Fig. 2: eine Schnittansicht durch das in Fig. 1 gezeigte Substrat; und
- Fig. 3: eine Schnittansicht durch ein Substrat gemäß einem weiteren Ausführungsbeispiel der Erfindung.

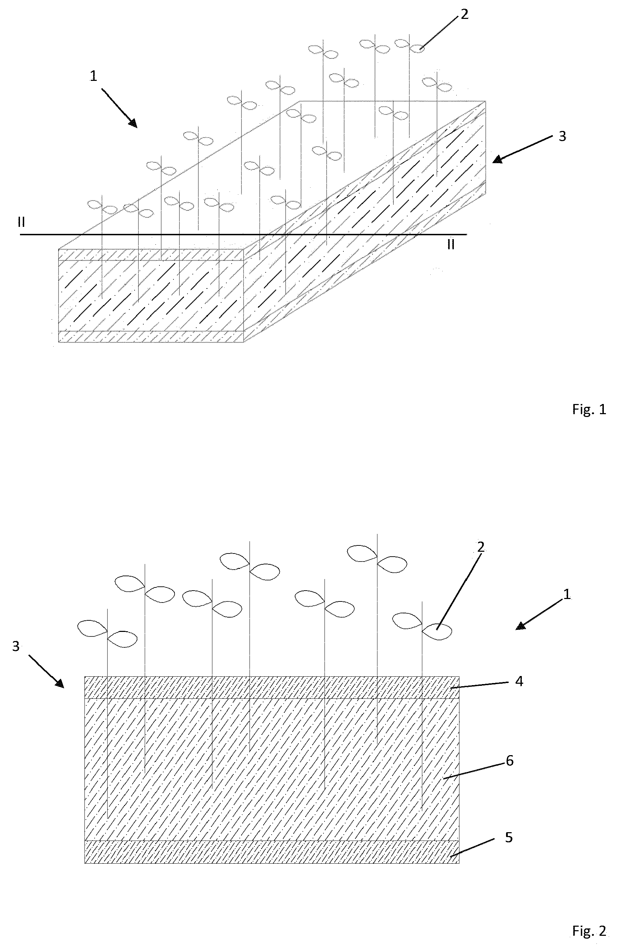

Fig. 1 zeigt eine Prinzipdarstellung eines Substrats 1 für den Anbau von krautigen Pflanzen 2, insbesondere Kräutern, bevorzugt Kresse, gemäß einem Ausführungsbeispiel der Erfindung in einer perspektivischen Darstellung.

Das Substrat 1 umfasst einen flächigen, d. h. im Wesentlichen zweidimensionalen, band- oder blattartigen Substratgrundkörper 3. Der Substratgrundkörper 3 ist strukturell derart beschaffen, dass auf und/oder in diesen Samen, Setzlinge, etc. auf- und/oder eingebracht sein können bzw. werden können, welche durch entsprechende Nährstoffzugabe, insbesondere Wasserzugabe, zu entsprechenden krautigen Pflanzen 2 heranwachsen. Anhand der in Fig. 2 gezeigten Schnittansicht durch das in Fig. 1 gezeigte Substrat 1 ist ersichtlich, dass der Substratgrundkörper 3 einen mehrlagigen, d. h. dreilagigen, Aufbau aufweist. Der mehrlagige Aufbau des Substratgrundkörpers 3 ergibt sich aus einer besonderen Anordnung zweier Decklagen 4, 5 und einer Zentrallage 6. Die Zentrallage 6 ist zwischen den Decklagen 4, 5 angeordnet.

Eine erste Decklage 4 bildet eine erste Außen- bzw. Oberfläche des Substratgrundkörpers 3 bzw. des Substrats 1, eine zweite Decklage 5 bildet eine der ersten Außen- oder Oberfläche des Substratgrundkörpers 3 gegenüber liegende zweite Außen- oder Oberfläche des Substratgrundkörpers 3 bzw. des Substrats 1. In dem in den Fig. 1, 2 gezeigten Ausführungsbeispiel bildet die erste Außen- oder Oberfläche des Substratgrundkörpers 3 die Oberseite des Substratgrundkörpers 3 bzw. des Substrats 1. Die zweite Außen- oder Oberfläche des Substratgrundkörpers 3 bildet die Unterseite des Substratgrundkörpers 3 bzw. des Substrats 1. Selbstverständlich ist eine umgekehrte Konfiguration denkbar.

Im Hinblick auf die Verwendung des Substratgrundkörpers 3 als Substrat 1 für den Anbau von Pflanzen 2 ist von besonderer Bedeutung, dass sowohl die Decklagen 4, 5 als auch die Zentrallage 6 aus reinem Zellstoff gebildet sind. Unter reinem Zellstoff ist zu verstehen, dass der Zellstoff (nahezu) ausschließlich aus dem eigentlichen Zellstoffmaterial gebildet ist, d. h. neben dem eigentlichen Zellstoffmaterial keine (oder kaum weitere) zusätzliche(n) Bestandteile, wie z. B. Rückstände aus Zellstoffrecyclingprozessen, enthält. Bei dem reinen Zellstoff handelt es sich um so genannten Frischzellstoff. Der Zellstoff kann (zusätzlich) andere bzw. weitere biologisch abbaubare bzw. unbedenkliche Substanzen enthalten.

Der Zellstoff kann gegebenenfalls aus mehreren (unterschiedlichen) Zellstoffmaterialien gebildet sein bzw. mehrere (unterschiedliche) Zellstoffmaterialien umfassen. Entsprechende Zellstoffmaterialien können sich hinsichtlich ihrer jeweiligen chemischen Eigenschaften, d. h. ihrer Zellstoffchemie bzw. chemischen Struktur, bzw. ihrer jeweiligen mechanischen Eigenschaften unterscheiden. Die mechanischen Eigenschaften jeweiliger Zellstoffmaterialien ergeben sich insbesondere aus den jeweiligen Faserparametern, d. h. z. B. Faseranordnung, Faserdichte, Faserlänge, Faserstärke, etc., des jeweiligen Zellstoffs. Der Zellstoff kann grundsätzlich pflanzlich oder synthetisch sein. Die Verwendung von Zellstoffen auf pflanzlicher Basis, insbesondere von Cellulose oder von auf Cellulose basierenden Zellstoffen, ist bevorzugt. Zweckmäßig ist insbesondere die Verwendung von Frischcellulose, wie sie beispielsweise zur Herstellung von Hygienepapier verwendet wird.

In dem in den Fig. 1, 2 gezeigten Ausführungsbeispiel sind die Decklagen 4, 5 im Vergleich zu der Zentrallage 6 formstabiler ausgebildet, sodass die Decklagen 4, 5, insbesondere auch bei Quellung, eine gewisse Formhaltewirkung auf die Zentrallage 6 ausüben. Derart kann sichergestellt werden, dass die typischerweise zu Auffaserung bzw. Auflösung neigende Zentrallage 6, insbesondere auch bei Quellung, in Form gehalten ist. Die Decklagen 4, 5 sind deshalb im Vergleich zu der Zentrallage 6 aus einem formstabile(re)n oder formstabil(er) ausgebildeten Zellstoff gebildet.

Zur Realisierung einer entsprechend hohen Formstabilität sind die Decklagen 4, 5 aus gepresstem oder textilartig, d. h. z. B. nach Art eines Gewebes oder Gewirkes, zusammengefasstem Zellstoff und die Zentrallage 6 aus nicht gepresstem losem bzw. gewirkeartigem Zellstoff gebildet. Durch die Pressung bzw. textilartige Zusammenfassung sind die Decklagen 4, 5, insbesondere auch bei Quellung, (im Wesentlichen) formstabil.

Die Decklagen 4, 5 weisen in dem in den Fig. 1, 2 gezeigten Ausführungsbeispiel im Vergleich zu der Zentrallage 6 eine höhere Dichte auf. Die Dichte eines Zellstoffs ist typischerweise proportional zu dessen mechanischer Stabilität, insbesondere dessen Reiß- bzw. Zugfestigkeit. Durch eine im Vergleich höhere Dichte der Decklagen 4, 5 verleihen diese dem Substratgrundkörper 3 - ähnlich einer aus der Leichtbautechnik bekannten Sandwichstruktur - eine hohe spezifische mechanische Stabilität. Da die Dichte typischerweise auch ein das Quellungsvermögen jeweiliger Lagen 4, 5, 6 beeinflussender Parameter ist, kann über die Dichte jeweiliger Lagen 4, 5, 6 auch das Quellungsvermögen jeweiliger Lagen 4, 5, 6 gezielt beeinflusst werden. Durch eine im Vergleich geringe(re) Dichte zeigt die Zentrallage 6 ein hohes Quellungsvermögen. Gleichermaßen bildet die Zentrallage 6 durch eine im Vergleich geringe(re) Dichte besondere Verankerungs- bzw. Verhakungsmöglichkeiten zur Verankerung bzw. Verhakung der Wurzeln entsprechender in dem Substrat 1 heranwachsender krautiger Pflanzen 2.

Neben der Dichte ist auch das Flächengewicht ein die mechanischen Eigenschaften wie auch das Quellungsvermögen jeweiliger Lagen 4, 5, 6 beeinflussender Parameter. Die Decklagen 4, 5 weisen im Vergleich zu der Zentrallage 6 ein geringeres Flächengewicht auf. Konkret weisen die Decklagen 4, 5 in dem in den Fig. gezeigten Ausführungsbeispielen ein Flächengewicht in einem Bereich zwischen 10 und 20 g/m² auf. Die Zentrallage 6 weist ein Flächengewicht in einem Bereich zwischen 200 und 500 g/m² auf. Auch durch das im Vergleich höhere Flächengewicht in Kombination mit einer geringe(re)n Dichte zeigt die Zentrallage 6 ein hohes Quellungsvermögen und bildet die erwähnten besondere Verankerungs- bzw. Verhakungsmöglichkeiten zur Verankerung bzw. Verhakung der Wurzeln entsprechender in dem Substrat 1 heranwachsender Pflanzen 2.

Anhand von Fig. 2 ist ersichtlich, dass die Decklagen 4, 5 im Vergleich zu der Zentrallage 6 eine geringere Dicke aufweisen. Die Ausbildung der Decklagen 4, 5 mit einer, insbesondere im Vergleich zu der Zentrallage 6, geringe(re)n Dicke trägt zu einem vergleichsweise kompakten Aufbau des Substratgrundkörpers 3 bei. Typischerweise liegt die Gesamtdicke eines Substratgrundkörpers 3 in einem Bereich zwischen 0,5 und 35 mm, insbesondere zwischen 1 und 5 mm. Die Dicke der Zentrallage 6 kann dabei in einem Bereich zwischen 0,5 und 34 mm, insbesondere zwischen 0,5 und 4,5 mm, liegen.

Im Zusammenhang mit der Verwendung reinen Zellstoffs zur Ausbildung der den Substratgrundkörper 3 bildenden Lagen 4, 5, 6 wurde bereits ein gewisses Feuchtigkeits-bzw. Flüssigkeitsaufnahmevermögen, insbesondere Wasseraufnahmevermögen, der einzelnen Lagen 4, 5, 6 erwähnt. Aus dem Feuchtigkeits- bzw. Flüssigkeitsaufnahmevermögen, insbesondere Wasseraufnahmevermögen, resultiert ein gewisses Quellungsvermögen der Lagen 4, 5, 6. Mithin besitzen die Lagen 4, 5, 6 bei Beaufschlagung mit einer Flüssigkeit, insbesondere Wasser, bzw. bei Aussetzung in einer feuchten Atmosphäre, z. B. in einer Wasserdampfatmosphäre, die Fähigkeit, eine bestimmte Menge an Flüssigkeit bzw. Feuchtigkeit aufzunehmen bzw. einzulagern. In den jeweiligen Lagen 4, 5, 6 aufgenommene bzw. eingelagerte Flüssigkeit bzw. Feuchtigkeit kann an die vermittels des Substrats 1 anzubauenden Pflanzen 2, insbesondere Kräuter, respektive entsprechende Samen bzw. Setzlinge abgegebenen werden.

Die Decklagen 4, 5 unterscheiden sich, wie angedeutet, in ihrem Feuchtigkeits- bzw. Flüssigkeitsaufnahmevermögen und somit ihrem Quellungsvermögen von der Zentrallage 6. Die Decklagen 4, 5 weisen im Vergleich zu der Zentrallage 6 andere Quellungseigenschaften, nämlich ein geringeres Quellungsvermögen und somit Feuchtigkeits- bzw. Flüssigkeitsaufnahmevermögen, insbesondere Wasseraufnahmevermögen, auf. Mithin werden die strukturellen Eigenschaften der Decklagen 4, 5 durch die Aufnahme von Feuchtigkeit bzw. Flüssigkeit und eine damit einhergehende Quellung im Vergleich zu der Zentrallage 6 weniger beeinträchtigt; die Decklagen 4, 5 bleiben im gequollenen Zustand (im Wesentlichen) formstabil.

Entsprechend ist die Zentrallage 6 typischerweise die Lage, welche den Großteil einer insgesamt in dem Substratgrundkörper 3 aufnehmbaren bzw. aufgenommenen Feuchtigkeits- oder Flüssigkeitsmenge aufnimmt. In diesem Zusammenhang ist nochmals die lose bzw. gewirkeartige Ausbildung der Zentrallage 6 zu erwähnen, welche eine besonders hohe und schnelle Feuchtigkeits- bzw. Flüssigkeitsaufnahme, insbesondere Wasseraufnahme, ermöglicht.

Die Decklagen 4, 5 und die Zentrallage 6 liegen nicht lose aufeinander auf, sondern sind unter Ausbildung eines den Substratgrundkörper 3 bildenden mehrlagigen Verbunds stabil mit- bzw. untereinander verbunden. Die Decklagen 4, 5 können dabei als auf ein bestimmtes Flächengewicht vorverpresste Halbzeuge vorliegen, bevor sie mit der Zentrallage 6 zur Ausbildung des Substratgrundkörpers 3 verbunden werden.

Zur Verbindung der einzelnen Lagen 4, 5, 6 mit- bzw. untereinander kommen geeignete form- und/oder kraft- und/oder stoffschlüssige Verbindungsarten in Betracht. Die erste Decklage 4 und die zweite Decklage 5 sind also jeweils zumindest abschnittsweise form- und/oder kraft- und/oder stoffschlüssig mit der Zentrallage 6 verbunden. Eine formschlüssige Verbindung zwischen den Decklagen 4, 5 und der Zentrallage 6 kann vermittels einer Klett- oder Hakenverbindung gebildet sein. Eine kraftschlüssige Verbindung zwischen den Decklagen 4, 5 und der Zentrallage 6 kann vermittels einer Pressverbindung gebildet sein. Eine stoffschlüssige Verbindung zwischen den Decklagen 4, 5 und der Zentrallage 6 kann vermittels einer Klebeverbindung gebildet sein. Gleiches gilt für die Verbindung der Decklagen 4, 5 mit- bzw. untereinander. In dem in den Fig. 1, 2 gezeigten Ausführungsbeispiel sind die Lagen 4, 5, 6 kraftschlüssig miteinander verpresst.

Wenigstens eine Decklage 4, 5 und/oder die Zentrallage 6 kann zumindest abschnittsweise mit einer Nährstoffzusammensetzung für eine jeweilige krautige Pflanze 2 versetzt sein. Derart lässt sich das Heranwachsen der krautigen Pflanzen 2 verbessern bzw. stabilisieren. Bei einer entsprechenden Nährstoffzusammensetzung kann es sich z. B. um eine Nitrat-, Phosphat- und/oder Kaliumlösung handeln. Eine entsprechende Nährstoffzusammensetzung ist typischerweise auf die in dem Substrat 1 anzubauenden Pflanzen 2 abgestimmt. Eine entsprechende Nährstoffzusammensetzung kann auch in Form einer, z. B. gallert- oder gelartigen, Imprägnierung jeweiliger Lagen 4, 5, 6 vorliegen.

Insbesondere bei einer mehrere übereinander angeordnete oder ausgebildete Zentrallagenelemente umfassenden Zentrallage 6 kann es zweckmäßig sein, dass wenigstens ein Zentrallagenelement mit einer entsprechenden Nährstoffzusammensetzung versehen ist. Dies ist insbesondere im Hinblick auf den Anbau von Blumen- oder Gemüsepflanzen respektive die Zucht entsprechender Setzlinge bzw. eine entsprechende Verwendung des Substrats 1 zweckmäßig.

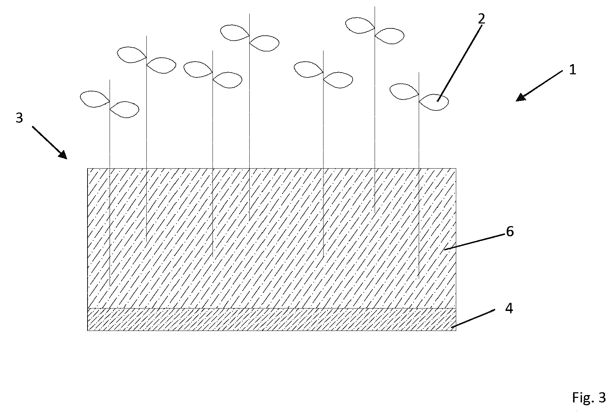

Fig. 3 zeigt eine Schnittansicht durch ein Substrat 1 gemäß einem weiteren Ausführungsbeispiel der Erfindung. Im Unterschied zu dem in den Fig. 1, 2 gezeigten Ausführungsbeispiel weist der Substratgrundkörper 3 einen nur zweilagigen Aufbau auf. Der zweilagige Aufbau des Substratgrundkörpers 3 ergibt sich aus einer besonderen Anordnung einer ersten Decklage 4 und der Zentrallage 6. Die Zentrallage 6 ist auf der ersten Decklage 4 angeordnet.

Die erste Decklage 4 bildet eine erste Außen- bzw. Oberfläche des Substratgrundkörpers 3 bzw. des Substrats 1, die Zentrallage 6 bildet eine der ersten Außen- oder Oberfläche des Substratgrundkörpers 3 gegenüber liegende zweite Außen- oder Oberfläche des Substratgrundkörpers 3 bzw. des Substrats 1. In dem in Fig. 3 gezeigten Ausführungsbeispiel bildet die erste Außen- oder Oberfläche des Substratgrundkörpers 3 die Unterseite des Substratgrundkörpers 3 bzw. des Substrats 1, d. h. die erste Decklage 4 bildet eine Art Unterlage für die Zentrallage 6. Die zweite Außen- oder Oberfläche des Substratgrundkörpers 3 bildet die Oberseite des Substratgrundkörpers 3 bzw. des Substrats 1. Selbstverständlich ist auch hier eine umgekehrte Konfiguration denkbar.

Im Übrigen gelten die Ausführungen im Zusammenhang mit dem in den Fig. 1, 2 gezeigten Ausführungsbeispiel analog für das in Fig. 3 gezeigte Ausführungsbeispiel.

Wenngleich in den Fig. nicht gezeigt, kann ein Substratgrundkörper 3 auch einen einlagigen Aufbau aufweisen. Ein einlagig aufgebauter Substratgrundkörper 3 ist allein aus einer entsprechenden Zentrallage 6 gebildet.

Es wurde erwähnt, dass, die krautigen Pflanzen 2 sobald diese ein gewisses Wachstum erreicht haben, z. B. durch einen oder mehrere Schnittvorgänge, von dem Substratgrundkörper 3 entfernt werden können. Aufgrund der Ausbildung des Substrats 1 aus reinem Zellstoff bzw. aus biologisch abbaubarem bzw. unbedenklichem Material ist es jedoch auch möglich, dass das Substrat 1 bzw. der Substratgrundkörper 3 insgesamt oder einzelne oder mehrere Lagen 4, 5, 6 des Substratgrundkörpers 3 gemeinsam mit den Pflanzen 2 in ein Beet oder dergleichen eingesetzt werden kann bzw. können. Ein mehrere Lagen 4, 5, 6 umfassender Verbund des Substratgrundkörpers 3 kann sonach vorher zumindest teilweise aufgelöst und entsprechende aus dem Verbund gelöste Lagen 4, 5, 6 gemeinsam mit den darin befindlichen, d. h. z. B. verhakten oder verwurzelten, Pflanzen 2 in ein Beet oder dergleichen eingesetzt werden. Die Pflanzen 2 müssen also nicht zwingend von dem Substratgrundkörper 1 entfernt werden, was einen besonders schonenden Umgang mit den Pflanzen 2 bedeutet.

Für das in Fig. 3 gezeigte Ausführungsbeispiel ist es sonach möglich, die Zentrallage 6 nebst Pflanzen 2 von der ersten Decklage 4 zu lösen und in ein Beet oder dergleichen einzusetzen. Analoges gilt selbstverständlich für das in den Fig. 1, 2 gezeigte Ausführungsbeispiel.

Neben dem Substrat 1 als solchem betrifft die Erfindung auch die Verwendung eines einen ein- oder mehrlagigen Aufbau, umfassend wenigstens eine Zentrallage 6 aus reinem Zellstoff, aufweisenden Substratgrundkörper 3 umfassenden Substrats 1 für den Anbau von Pflanzen 2, insbesondere krautigen Pflanzen bzw. Kräutern, bevorzugt Kresse, Blumen- oder Gemüsepflanzen.

Anhand von Untersuchungen konnte gezeigt werden, dass die Verwendung eines entsprechenden Substrats 1 sich hervorragend für den Anbau von Pflanzen 2, insbesondere Kräutern, bevorzugt Kresse, sowie von Blumen- oder Gemüsepflanzen, eignet.

### BEZUGSZEICHENLISTE

- 1: Substrat
- 2: Pflanze
- 3: Substratgrundkörper
- 4: erste Decklage
- 5: zweite Decklage
- 6: Zentrallage

## Patentansprüche

1. Substrat (1) für den Anbau von Pflanzen (2), insbesondere Kräutern, bevorzugt Kresse, umfassend einen Substratgrundkörper (3), **dadurch gekennzeichnet, dass** der Substratgrundkörper (3) einen ein- oder mehrlagigen Aufbau, umfassend wenigstens eine Zentrallage (6) aus reinem Zellstoff, aufweist.

2. Substrat nach Anspruch 1, **dadurch gekennzeichnet, dass** der Substratgrundkörper (3) einen mehrlagigen Aufbau, bestehend aus einer ersten Decklage (4) aus reinem Zellstoff und der wenigstens einen Zentrallage (6), welche auf der ersten Decklage (4) angeordnet oder ausgebildet ist, aufweist, oder einen mehrlagigen Aufbau, bestehend aus einer ersten Decklage (4) aus reinem Zellstoff, einer zweiten Decklage (5) aus einem Zellstoff und der wenigstens einen Zentrallage (6), welche zwischen der ersten Decklage (4) und der zweiten Decklage (5) angeordnet oder ausgebildet ist, aufweist.

3. Substrat nach Anspruch 2, **dadurch gekennzeichnet, dass** die erste Decklage (4) und/oder die zweite Decklage (5) jeweils zumindest abschnittsweise form- und/oder kraft- und/oder stoffschlüssig mit der Zentrallage (6) verbunden ist.

4. Substrat nach Anspruch 3, **dadurch gekennzeichnet, dass** eine formschlüssige Verbindung zwischen einer Decklage (4, 5) und der Zentrallage (6) vermittels einer Klett- oder Hakenverbindung gebildet ist, eine kraftschlüssige Verbindung zwischen einer Decklage (4, 5) und der Zentrallage (6) vermittels einer Pressverbindung gebildet ist und eine stoffschlüssige Verbindung zwischen einer Decklage (4, 5) und der Zentrallage (6) vermittels einer Klebeverbindung gebildet ist.

5. Substrat nach einem der Ansprüche 2 bis 4, **dadurch gekennzeichnet, dass** die erste Decklage (4) und/oder die zweite Decklage (5) und/oder die Zentrallage (6) jeweils zumindest abschnittsweise quellbar ist.

6. Substrat nach einem der Ansprüche 2 bis 5, **dadurch gekennzeichnet, dass** die erste Decklage (4) und/oder die zweite Decklage (5) im Vergleich zu der Zentrallage (6) andere Quellungseigenschaften aufweist, wobei die erste Decklage (4) und/oder die zweite Decklage (5) im Vergleich zu der Zentrallage (6) weniger quellbar ist.

7. Substrat nach einem der Ansprüche 2 bis 6, **dadurch gekennzeichnet, dass** die erste Decklage (4) und/oder die zweite Decklage (5) im Vergleich zu der Zentrallage (6) eine höhere Dichte aufweist.

8. Substrat nach einem der Ansprüche 2 bis 7, **dadurch gekennzeichnet, dass** die erste Decklage (4) und/oder die zweite Decklage (5) aus gepresstem oder textilartig, insbesondere gewebeartig, zusammengefasstem Zellstoff gebildet ist und die Zentrallage (6) aus nicht gepresstem, insbesondere losem, bevorzugt gewirkeartigem, Zellstoff gebildet ist.

9. Substrat nach einem der Ansprüche 2 bis 8, **dadurch gekennzeichnet, dass** die erste Decklage (4) und/oder die zweite Decklage (5) ein Flächengewicht in einem Bereich zwischen 5 und 50 g/m², insbesondere ein Flächengewicht in einem Bereich zwischen 10 und 20 g/m², aufweist und die Zentrallage (6) ein Flächengewicht in einem Bereich zwischen 1 und 3000 g/m², insbesondere ein Flächengewicht in einem Bereich zwischen 200 und 500 g/m², aufweist.

10. Substrat nach einem der Ansprüche 2 bis 9, **dadurch gekennzeichnet, dass** die erste Decklage (4) und/oder die zweite Decklage (5) im Vergleich zu der Zentrallage (6) eine geringere Dicke aufweist.

11. Substrat nach einem der Ansprüche 2 bis 10, **dadurch gekennzeichnet, dass** die erste Decklage (4) und/oder die zweite Decklage (5) im Vergleich zu der Zentrallage (6) formstabiler ausgebildet ist, sodass die erste Decklage (4) und/oder die zweite Decklage (5) eine Formhaltewirkung auf die Zentrallage (6) ausübt.

12. Substrat nach einem der vorhergehenden Ansprüche, **dadurch gekennzeichnet, dass** die erste Decklage (4) und/oder die zweite Decklage (5) und/oder die Zentrallage (6) zumindest abschnittsweise mit wenigstens einer Nährstoffzusammensetzung für eine jeweilige Pflanze (2) versetzt ist.

13. Verwendung eines einen ein- oder mehrlagigen Aufbau, umfassend wenigstens eine Zentrallage (6) aus reinem Zellstoff, aufweisenden Substratgrundkörper (3) umfassenden Substrats (1) für den Anbau von Pflanzen (2), insbesondere Kräutern, bevorzugt Kresse.

14. Verwendung nach Anspruch 13, **dadurch gekennzeichnet, dass** der Substratgrundkörper (3) einen mehrlagigen Aufbau, bestehend aus einer ersten Decklage (4) aus reinem Zellstoff und der wenigstens einen Zentrallage (6), welche auf der ersten Decklage (4) angeordnet oder ausgebildet ist, aufweist, oder einen mehrlagigen Aufbau, bestehend aus einer ersten Decklage (4) aus reinem Zellstoff, einer zweiten Decklage (5) aus einem Zellstoff und der wenigstens einen Zentrallage (6), welche zwischen der ersten Decklage (4) und der zweiten Decklage (5) angeordnet oder ausgebildet ist, aufweist.

15. Verwendung nach Anspruch 14, **dadurch gekennzeichnet, dass** die erste Decklage (4) und/oder die zweite Decklage (5) jeweils zumindest abschnittsweise form- und/oder kraft- und/oder stoffschlüssig mit der Zentrallage (6) verbunden ist.
